# EUROPEAN PATENT SPECIFICATION

(11) **EP 2 772 614 B1**
(45) Date of publication and mention of the grant of the patent: **25.04.2018**
(21) Application number: 14157392.3
(22) Date of filing: 28.02.2014
(51) Int. Cl.: F01D 5/14, F01D 5/18

(54) **Turbomachine blade production method**
Turbomaschinenschaufelherstellungsverfahren
Procédé de production de pale de turbomachine

(30) Priority: 28.02.2013 IT TV20130030
(43) Date of publication of application: 03.09.2014
(73) Proprietor: Pietro Rosa T.B.M. S.r.l., Maniago (IT)
(72) Inventor: Maurizio, Andrea, 33092 CAVASSO NUOVO (IT)
(74) Representative: Bellemo, Matteo

(56) References cited:
- EP-A1- 1 462 609
- EP-A2- 2 362 066
- DE-A1- 19 858 702
- FR-A1- 2 296 488

## Description

The present invention relates to a turbomachine blade production method.

More specifically, the present invention relates to a method of producing a lightweight rotor or stator blade for a compressor or front fan of an aircraft turbine engine, to which use the following description refers purely by way of example.

As is known, rotor and stator blades of aircraft turbine engine compressors substantially comprise a coupling root designed to fit and lock rigidly to the compressor hub or centre blade mounting disk; and an airfoil-shaped oblong member, which cantilevered extends from the coupling root, so as to cantilevered project radially outwards of the blade mounting hub or disk when the coupling root is fixed inside the hub or centre blade mounting disk.

Stator blades also have an upper coupling head, which is located at the top end of the airfoil-shaped oblong member, i.e. at the opposite end to the coupling root, and is designed to fit and lock rigidly to the outer blade mounting ring of the compressor.

Having to withstand fairly severe mechanical stress and heat, the lower coupling root, the airfoil-shaped oblong member, and the upper coupling head (if there is one) are usually formed in one piece from a single block of high-strength metal, which is forged and then milled to shape the blade as required.

To reduce inertia and the overall weight of turbine engines, some aircraft turbine engine manufacturers have opted over the past few years to employ blades with hollow airfoil-shaped oblong members in parts of the engine, so as to drastically reduce the amount of metal needed to make the blade.

Patent Application US2006/039792 describes a method of producing a lightweight aircraft turbine engine blade, which comprises :
- milling, roughly in the middle of one of the two major faces of the airfoil-shaped oblong member, a large hollow seat substantially reproducing, to a smaller scale, the shape of the airfoil-shaped oblong member itself;
- sealing the opening of the hollow seat with a cover plate perfectly complementary in shape to the seat opening; and
- welding the peripheral edge of the cover plate to the mating edge in the airfoil-shaped oblong member.
EP-A-2 362 066 discloses a method of producing a turbomachine blade according to the preamble of claim 1.

Producing a lightweight blade from a single block of metal, however, is an extremely painstaking, time-consuming, high-cost job, because of the large amount of material the numeric-control milling machine has to remove to shape the part as required.

It is therefore an object of the present invention to provide a method of producing a lightweight turbomachine blade, designed to significantly reduce the manufacturing cost of blades of this sort.

According to the present invention, there is provided a method of producing a turbomachine blade, as defined in Claim 1 and preferably, though not necessarily, in any one of the Claims dependent on Claim 1.

A non-limiting embodiment of the present invention will be described by way of example with reference to the attached drawings, in which :
Figure 1 shows a partly exploded view in perspective of a lightweight turbomachine blade in accordance with the teachings of the present invention;
Figure 2 shows a section of the Figure 1 blade along line A-A:
Figures 3 to 11 show schematics of steps in the method of producing the lightweight turbomachine blade in Figures 1 and 2;
Figure 12 shows a view in perspective of a further embodiment of the lightweight turbomachine blade in Figure 1.

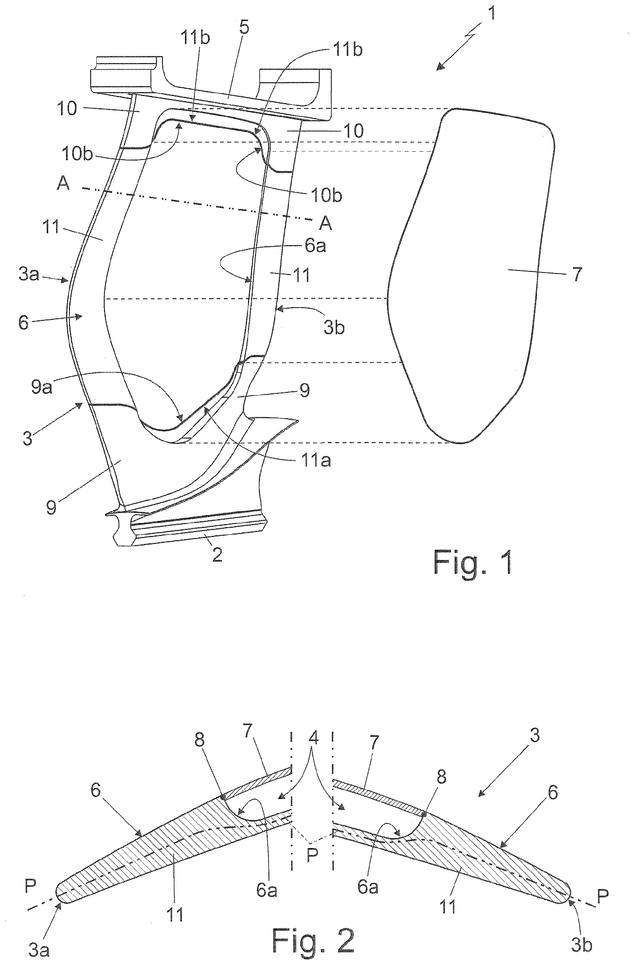

With reference to Figures 1 and 2, number 1 indicates as a whole a lightweight turbomachine blade, which may be used to advantage, for example, in the compressor or front fan of a preferably, though not necessarily, aircraft turbine engine.

Lightweight blade 1 is made of metal, and substantially comprises a lower coupling root 2 designed to fit and lock rigidly to the turbine engine hub or centre blade mounting disk (not shown); an airfoil-shaped oblong member 3 which cantilevered extends from coupling root 2, so as to cantilevered project substantially radially outwards of the hub or blade mounting disk (not shown) when coupling root 2 is fixed inside the hub or centre blade mounting disk, and inside has a large closed weight-reducing cavity 4, the three-dimensional shape of which preferably, though not necessarily, substantially reproduces, to a smaller scale, the three-dimensional shape of airfoil-shaped oblong member 3 as a whole; and an upper coupling head 5, which is located at the second end of airfoil-shaped oblong member 3, i.e. at the opposite end to coupling root 2, and is designed to fit and lock rigidly to the turbine engine outer blade mounting ring (not shown).

In other words, airfoil-shaped oblong member 3 is designed to joint/connect coupling root 2 rigidly to coupling head 5.

In the example shown, in particular, coupling root 2, airfoil-shaped oblong member 3, and coupling head 5 are preferably, though not necessarily, made of titanium alloy, aluminium alloy, or special high-strength steel.

Airfoil-shaped oblong member 3, in turn, comprises a substantially airfoil-shaped, main plate-like element 6 which connects directly to coupling root 2 and coupling head 5, and which, substantially in the centre of one of its two major faces, has at least one hollow weight-reducing seat 6a of predetermined shape; and a cover plate 7 which closes the opening of hollow seat 6a to form the inner cavity 4 and complete the outer profile of airfoil-shaped oblong member 3.

More specifically, hollow weight-reducing seat 6a preferably extends over more than 40% of the total area of the major face of main plate-like element 6 in which hollow seat 6a is formed.

Preferably cover plate 7 instead is complementary in shape to, and serves to airtight seal, the opening of hollow seat 6a.

More specifically, cover plate 7 is preferably fixed irremovably to the opening of hollow seat 6a in main plate-like element 6 by a weld bead 8 preferably extending seamlessly along the whole peripheral edge of cover plate 7.

Preferably, though not necessarily, the shape of hollow seat 6a also roughly reproduces, to a smaller scale, the three-dimensional shape of airfoil-shaped oblong member 3 as a whole.

With reference to Figures 1 and 2, main plate-like element 6 in turn is divided into a lower connecting fin 9, which cantilevered projects from coupling root 2 towards coupling head 5 and is formed in one piece with coupling root 2; an upper connecting fin 10, which cantilevered projects from coupling head 5 towards coupling root 2 and is formed in one piece with coupling head 5; and a centre plate-like body 11, which is located between the two connecting fins 9 and 10, is shaped/designed to form an extension of connecting fins 9 and 10, and is butt-welded to, to form one piece with, connecting fins 9 and 10. Centre plate-like body 11 is also shaped to at least partly bound/form hollow seat 6a of main plate-like element 6.

More specifically, the lower edge 11a of centre plate-like body 11 and the ridge 9a of lower connecting fin 9 are complementary in shape, and are butt welded to each other so that centre plate-like body 11 forms one piece with lower connecting fin 9; and the upper edge 11b of centre plate-like body 11 and the ridge 10b of upper connecting fin 10 are complementary in shape, and are butt welded to each other so that centre plate-like body 11 forms one piece with upper connecting fin 10.

More specifically, lower edge 11a of centre plate-like body 11 and ridge 9a of lower connecting fin 9 preferably extend from the leading edge 3a to the trailing edge 3b of airfoil-shaped oblong member 3 along a curved, preferably, though not necessarily, substantially Q (omega) shaped path.

Likewise, upper edge 11b of centre plate-like body 11 and ridge 10b of upper connecting fin 10 preferably also extend from the leading edge 3a to the trailing edge 3b of airfoil-shaped oblong member 3 along a curved, preferably, though not necessarily, substantially Q (omega) shaped path.

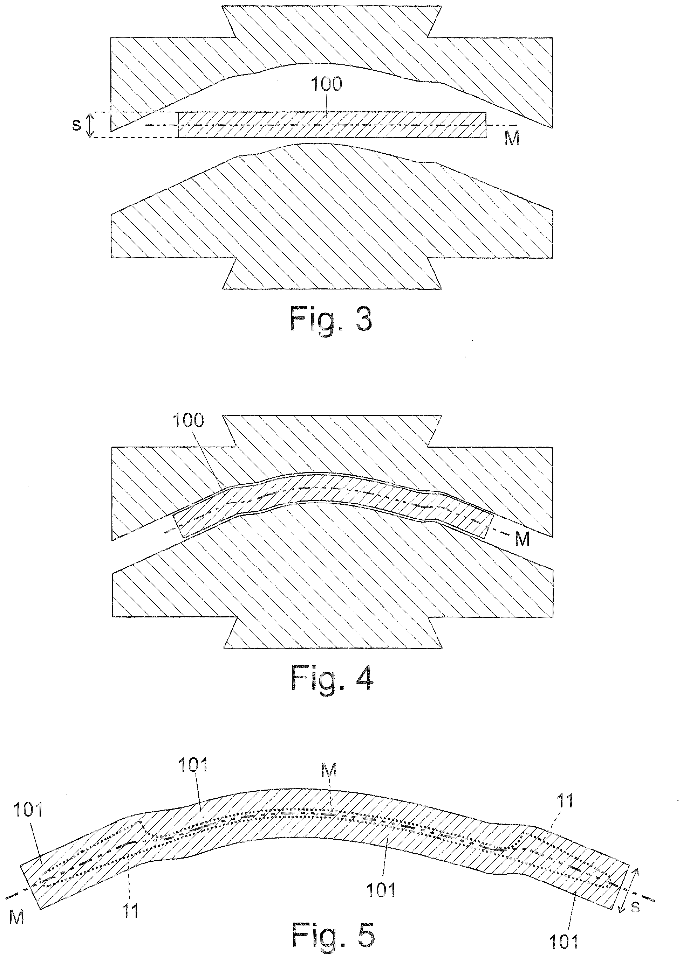

With reference to Figures 3, 4 and 5, the method of producing lightweight blade 1 comprises :
- making a flat metal plate 100 of substantially constant thickness s greater than the maximum thickness of centre plate-like body 11 of blade 1, and with a contour over-approximating the flat, spread-out contour of centre plate-like body 11; and
- twisting and curving flat plate 100 by means of a sheet metal forming process (i.e. press-forming with no appreciable reduction in the nominal thickness of the plate) to obtain a blank plate 101, in which the three-dimensional shape of the centreline surface M of the press-formed plate 101 substantially matches that of the centreline surface P of centre plate-like body 11 of airfoil-shaped oblong member 3 of blade 1.

In other words, the method of producing lightweight blade 1 comprises twisting and curving a flat plate 100 by means of a forming process (i.e. plastic deformation of the plate, with no appreciable reduction in its nominal thickness) so that the centreline surface M of the resulting blank plate 101 substantially matches the centreline surface P of the designed centre plate-like body 11.

Where the 'centreline surface' is the locus/set of points inside the centre plate-like body, which are locally equidistant from the surfaces forming the two major faces of the centre plate-like body.

The centreline surface M of blank plate 101 is therefore the curved surface formed by the points locally equidistant from the two faces of blank plate 101. And the centreline surface P of centre plate-like body 11 is the curved surface formed by the points locally equidistant from the surfaces of the two faces of centre plate-like body 11, also taking into account the depression formed by the portion of hollow weight-reducing seat 6a in centre plate-like body 11.

In other words, the three-dimensional shape of centreline surface P of centre plate-like body 11 is also determined by the shape of the portion of hollow weight-reducing seat 6a formed in centre plate-like body 11.

In the example shown, thickness **s** of flat plate 100 preferably over-approximates the maximum thickness of centre plate-like body 11 of blade 1.

More specifically, the difference between the thickness **s** of flat metal plate 100 and the maximum thickness of centre plate-like body 11 must preferably be less than 2 mm (millimetres).

Preferably, though not necessarily, the thickness **s** of flat plate 100 ranges between 5 mm and 40 mm (millimetres).

In the example shown, flat metal plate 100 of constant thickness over-approximating the maximum thickness of centre plate-like body 11 is preferably obtained by appropriately cutting a large flat metal plate (not shown) of constant thickness greater than the maximum thickness of the centre plate-like body 11 of the airfoil-shaped oblong member 3 of the to-be-made blade 1.

In other words, the method of producing blade 1 comprises cutting, from a large flat metal plate (not shown) of constant thickness over-approximating the maximum thickness of centre plate-like body 11, a plate portion with a contour over-approximating the contour, flat spread-out on the laying plane, of the centre plate-like body 11 of the airfoil-shaped oblong member 3 of the blade 1 to be made, thus to obtain the flat plate 100.

In the example shown, the thickness of the flat metal plate preferably over-approximates the maximum thickness of centre plate-like body 11 of blade 1, and preferably ranges between 5 mm and 40 mm (millimetres).

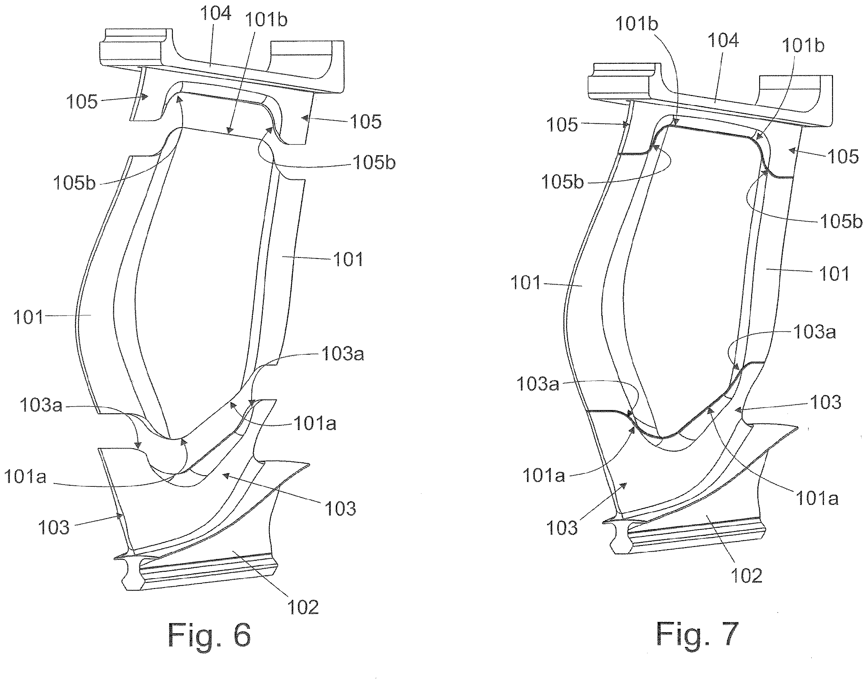

With reference to Figures 6 and 7, the method of producing blade 1 also comprises
- making, preferably by milling and/or stamping and/or forging and/or die-casting, a first semifinished metal part 102, the three-dimensional shape of which over-approximates the shape of coupling root 2 of blade 1, and which also has a projecting appendage 103, the three-dimensional shape of which over-approximates the shape of lower connecting fin 9.

With reference to Figures 6 and 7, the method of producing blade 1 then comprises :
- shaping the lower edge 101a of blank plate 101 and the ridge 103a of projecting appendage 103 of semifinished part 102, so that the lower edge 101a of blank plate 101 and the ridge 103a of projecting appendage 103 are complementary in shape;
- placing the lower edge 101a of blank plate 101 on the ridge 103a of projecting appendage 103, so that blank plate 101 is aligned locally with projecting appendage 103; and
- butt-welding the lower edge 101a of blank plate 101 to ridge 103a of projecting appendage 103 to connect the two parts rigidly to each other.

More specifically, in the example shown, the method of producing blade 1 preferably comprises shaping the lower edge 101a of blank plate 101 and the ridge 103a of projecting appendage 103, so that they extend from the leading edge 3a to the trailing edge 3b of airfoil-shaped oblong member 3 along a curved, preferably, though not necessarily, substantially Q (omega) shaped path.

With reference to Figures 6 and 7, the method of producing blade 1 also comprises :
- making, preferably by milling and/or stamping and/or forging and/or die-casting, a second semifinished metal part 104, the three-dimensional shape of which over-approximates the shape of coupling head 5 of blade 1, and which also has a projecting appendage 105, the three-dimensional shape of which over-approximates the shape of upper connecting fin 10.

With reference to Figures 6 and 7, the method of producing blade 1 then comprises :
- shaping the upper edge 101b of blank plate 101 and the ridge 105b of projecting appendage 105 of semifinished part 104, so that the upper edge 101b of blank plate 101 and the ridge 105b of projecting appendage 105 are complementary in shape;
- placing the upper edge 101b of blank plate 101 on the ridge 105b of projecting appendage 105, so that blank plate 101 is aligned locally with projecting appendage 105; and
- butt-welding the upper edge 101b of blank plate 101 to ridge 105b of projecting appendage 105 to connect the two parts rigidly to each other.

More specifically, in the example shown, the method of producing blade 1 preferably comprises shaping the upper edge 101b of blank plate 101 and the ridge 105b of projecting appendage 105, so that they extend from the leading edge 3a to the trailing edge 3b of airfoil-shaped oblong member 3 along a curved, preferably, though not necessarily, substantially Q (omega) shaped path.

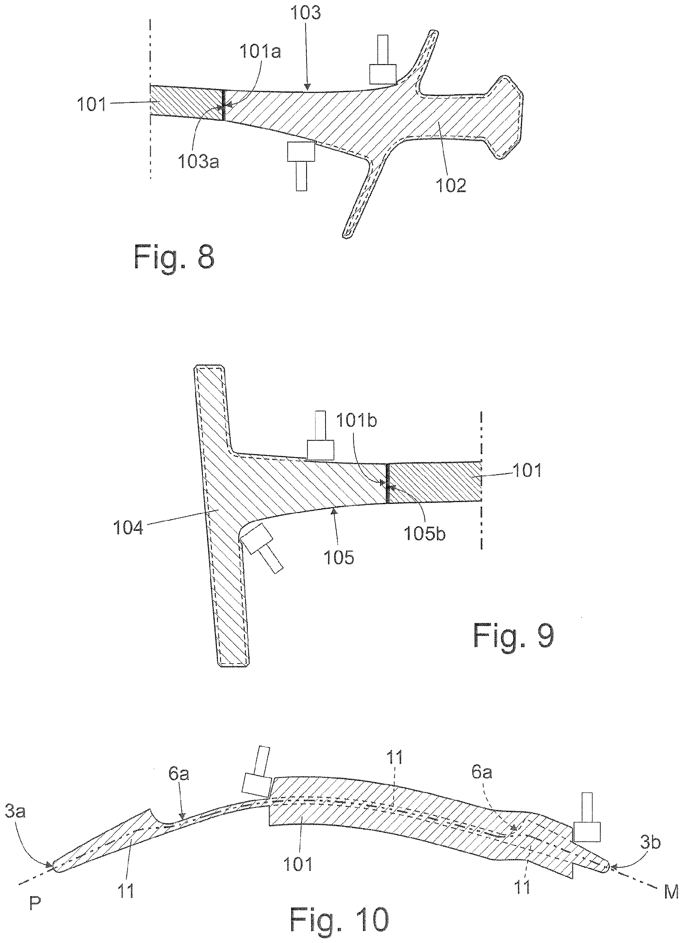

With reference to Figures 8, 9 and 10, after welding lower edge 101a of blank plate 101 to ridge 103a of projecting appendage 103, and upper edge 101b of blank plate 101 to ridge 105b of projecting appendage 105, the method of producing blade 1 comprises trimming/machining, by milling or other material-removing machining operation, the excess material from the resulting part to obtain coupling root 2, main plate-like element 6 of airfoil-shaped oblong member 3, and coupling head 5 of blade 1 of the desired shape.

More specifically, during the step of removing excess material from the part formed by butt-welding blank plate 101 to the two semifinished parts 102 and 104, the method of producing blade 1 comprises:
- trimming/machining, by milling or other material-removing machining operation, excess metal off the two semifinished parts 102 and 104, to obtain coupling root 2 and coupling head 5 respectively of lightweight blade 1; and/or
- trimming/machining, by milling or other material-removing machining operation, excess metal off the long side edges of blank plate 101 and the two projecting appendages 103 and 105, so as to form leading edge 3a and trailing edge 3b of airfoil-shaped oblong member 3; and/or
- trimming/machining, by milling or other material-removing machining operation, excess metal off the two major faces of blank plate 101 and the two major faces of projecting appendages 103 and 105, to obtain main plate-like element 6 of airfoil-shaped oblong member 3, together with hollow weight-reducing seat 6a.

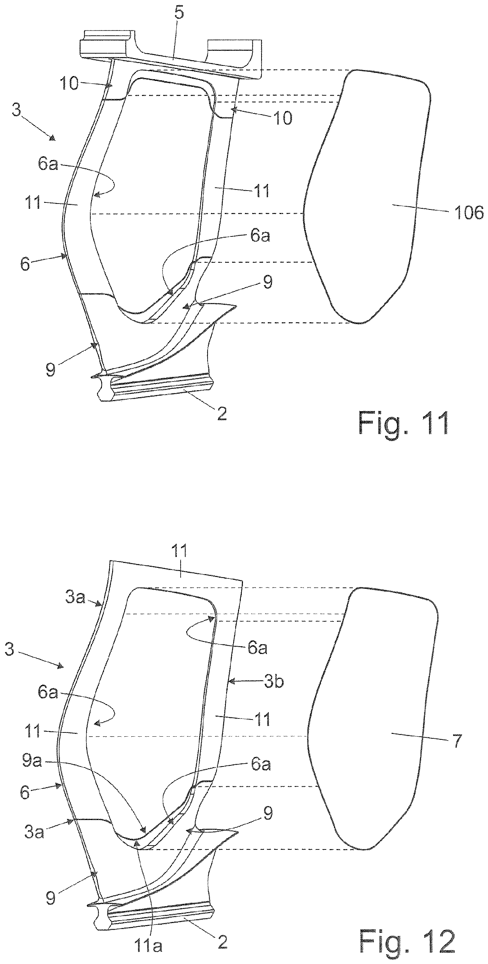

With reference to Figure 11, after removing excess material from the part formed by butt welding blank plate 101 to the two semifinished parts 102 and 104, the method of producing blade 1 comprises closing, preferably sealing, the opening of hollow seat 6a in one of the two faces of main plate-like element 6 by means of a further plate-like element 106 of predetermined thickness, so as to complete the outer profile of airfoil-shaped oblong member 3 and at the same time form the inner cavity 4 in airfoil-shaped oblong member 3.

More specifically, in the example shown, the method of producing blade 1 preferably comprises :
- making a further plate-like element 106, the three-dimensional shape of which is complementary to that of the opening of the hollow seat 6a in the face of main plate-like element 6, and the thickness of which is less than the depth of hollow seat 6a;
- placing plate-like element 106 on the face of main plate-like element 6 in which hollow seat 6a is formed, so as to seal the opening of hollow seat 6a; and
- fixing plate-like element 106 irremovably to main plate-like element 6.

Plate-like element 106 thus forms the cover plate 7 of the airfoil-shaped oblong member.

In the example shown, the method of producing blade 1 comprises preferably fixing plate-like element 106 irremovably to main plate-like element 6 by means of a weld bead preferably extending seamlessly along the entire peripheral edge of plate-like element 106; and then trimming/machining, by milling or other material-removing machining operation, excess metal off the weld between plate-like element 106 and main plate-like element 6.

In the example shown, the method of producing lightweight blade 1 preferably provides to obtain plate-like element 106 by cutting, from a large flat, preferably 1-4 mm (millimetre) thick metal sheet (not shown), a plate portion complementary in shape to the contour of the opening of hollow seat 6a.

The method of producing blade 1 as described has numerous advantages.

Firstly, making centre plate-like body 11 of main plate-like element 6 by sheet metal forming the flat plate 100, i.e. by press-forming flat plate 100 with no appreciable reduction in the nominal thickness of the plate, greatly reduces the manufacturing cost of blade 1. Which cost saving is considerable in the case of large-size blades 1.

Sheet metal forming of a flat plate, in fact, is a processing technique which is different from forging, which produces a plastic deformation of the plate with no appreciable reduction in its nominal thickness, and which requires much less energy, with all the economic advantages this entails.

Secondly, twisting and curving flat plate 100 to form a blank plate 101 in which the three-dimensional shape of centreline surface M of the plate substantially matches the three-dimensional shape of the centreline surface P of centre plate-like body 11, minimizes the amount of metal that has to be milled or otherwise machined off to obtain centre plate-like body 11.

Last but not least, the method of producing blade 1 allows the semifinished parts 102 and 104, eventually forming coupling root 2 and coupling head 5 of blade 1, to be produced separately using production processes best suited to the three-dimensional shape and desired mechanical characteristics of each part.

Clearly, changes may be made to blade 1 and to the method of producing it, without, however, departing from the scope of the present invention, as defined by the appended claims.

For example, with reference to Figure 12, blade 1 may have no coupling head 5. In which case, main plate-like element 6 of airfoil-shaped oblong member 3 is made up of the lower connecting fin 9 which cantilevered projects from, and is formed in one piece with, the coupling root 2; and of centre plate-like body 11 which only forms an extension of lower connecting fin 9, and is butt-welded to, to form one piece with, lower connecting fin 9.

## Claims

1. A method of producing a turbomachine blade (1) comprising a coupling root (2), and an airfoil-shaped oblong member (3) cantilevered projecting from said coupling root (2);
said airfoil-shaped oblong member (3) comprising a main plate-like element (6) connected directly to the coupling root (2), and a cover plate (7) for closing a hollow weight-reducing seat (6a) formed in one of the two faces of said main plate-like element (6); said main plate-like element (6) being in turn divided into a lower connecting fin (9) cantilevered projecting from the coupling root (2), and a plate-like body (11) butt welded to said lower connecting fin (9) to form an extension of the lower connecting fin (9);
the method being **characterized by** comprising the steps of :
- making a flat metal plate (100) which has a substantially constant thickness (s) greater than the maximum thickness of the plate-like body (11) of the blade (1), and which has a contour over-approximating the flat, spread-out contour of said plate-like body (11); and
- twisting and curving said flat plate (100) by means of a sheet metal forming process, thus to obtain a blank plate (101) in which the three-dimensional shape of the centerline surface (M) of the blank plate (101) substantially matches with the three-dimensional shape of the centerline surface (P) of the plate-like body (11) of said main plate-like element (6).

2. A method of producing a turbomachine blade according to Claim 1, **characterized by** also comprising the step of :
- making a first semifinished metal part (102) which has a three-dimensional shape that over-approximates the shape of the coupling root (2) of the blade (1), and which also has a projecting appendage (103) having a three-dimensional shape that over-approximates the shape of the lower connecting fin (9);
- shaping the lower edge (101a) of the blank plate (101) and the ridge (103a) of the projecting appendage (103) of said first semifinished part (102), so that the lower edge (101a) of said blank plate (101) and the ridge (103a) of the projecting appendage (103) of said first semifinished part (102) are complementary in shape to one another;
- placing the lower edge (101a) of said blank plate (101) in abutment against the ridge (103a) of the projecting appendage (103) of said first semifinished part (102), while locally aligning said blank plate (101) to said projecting appendage (103); and
- butt-welding the lower edge (101a) of said blank plate (101) to the ridge (103a) of the projecting appendage (103) of said first semifinished part (102) to join the two parts rigidly to each other.

3. A method of producing a turbomachine blade according to Claim 1 or 2, **characterized in that** the thickness (s) of said flat plate (100) over-approximates the maximum thickness of the plate-like body (11) of the blade (1).

4. A method of producing a turbomachine blade according to any one of the preceding claims, **characterized in that** said blade (1) also comprises an upper coupling head (5); **in that** the main plate-like element (6) also comprises an upper connecting fin (10), which cantilevered projects from the coupling head (5) towards the coupling root (2) and is merged to said plate-like body (11); and the method also comprises the steps of:
- making a second semifinished metal part (104) which has a three-dimensional shape that over-approximates the shape of the coupling head (5) of the blade (1), and which also has a projecting appendage (105) having a three-dimensional shape that over-approximates the shape of the upper connecting fin (10);
- shaping the upper edge (101b) of said blank plate (101) and the ridge (105b) of the projecting appendage (105) of said second semifinished part (104), so that the upper edge (101b) of said blank plate (101) and the ridge (105b) of the projecting appendage (105) of said second semifinished part (104) are complementary in shape to one another;
- placing the upper edge (101b) of said blank plate (101) in abutment on the ridge (105b) of the projecting appendage (105) of said second semifinished part (104), while locally aligning said blank plate (101) to said projecting appendage (105); and
- butt-welding the upper edge (101b) of said blank plate (101) to the ridge (105b) of the projecting appendage (105) of said second semifinished part (104) to join the two parts rigidly to each other.

5. A method of producing a turbomachine blade according to any one of the preceding claims, **characterized by** also comprising, after the blank plate (101) is welded to the first semifinished part (102) and possibly also to the second semifinished part (104), the step of trimming off/removing, via material-removal machining, the excess material from the resulting part to obtain the coupling root (2), the main plate-like element (6), and possibly also the coupling head (5) of the blade (1).

6. A method of producing a turbomachine blade according to Claim 5, **characterized in that** the step of trimming off/removing the excess material from the resulting part comprises the step of trimming off/ removing, via material-removal machining, the excess material from the first (102) and possibly also from the second (104) semifinished part, to obtain the coupling root (2) and possibly the coupling head (5) of the blade (1) .

7. A method of producing a turbomachine blade according to Claim 5 or 6, **characterized in that** the step of trimming off/removing the excess material from the resulting part comprises the step of trimming off/ removing, via material-removal machining, the excess material from the long side edges of said blank plate (101), from the projecting appendage (103) of said first semifinished part (102), and possibly from the projecting appendage (105) of said second semifinished part (104), so as to form the leading edge (3a) and trailing edge (3b) of the airfoil-shaped oblong member (3) .

8. A method of producing a turbomachine blade according to Claim 5, 6 or 7, **characterized in that** the step of trimming off/removing the excess material from the resulting part comprises the step of trimming off/ removing, via material-removal machining, the excess material from the two major faces of said blank plate (101), from the two major faces of the projecting appendage (103) of said first semifinished part (102), and possibly from the two major faces of the projecting appendage (105) of said second semifinished part (104), so as to obtain the main plate-like element (6) of the airfoil-shaped oblong member (3).

9. A method of producing a turbomachine blade according to any one of the preceding claims, **characterized in that** said hollow weight-reducing seat (6a) extends over more than 40% of the total area of the face of the main plate-like element (6) where the hollow weight-reducing seat (6a) is located.

10. A method of producing a turbomachine blade according to any one of the preceding claims, **characterized in that** the step of trimming off/removing the excess material from the resulting part comprises the step of trimming off/removing, via material-removal machining, the excess metal from the two major faces of said blank plate (101), from the two major faces of the projecting appendage (103) of said first semifinished part (102), and possibly from the two major faces of the projecting appendage (105) of said second semifinished part (104), so as to obtain the main plate-like element (6) of the airfoil-shaped oblong member (3) together with the hollow weight-reducing seat (6a).

11. A method of producing a turbomachine blade according to Claim 10, **characterized by** also comprising, after forming the hollow weight-reducing seat (6a) in one of the two major faces of said main plate-like element (6), also the step of closing the opening of said hollow weight-reducing seat (6a) by means of a second plate-like element (106) of predetermined thickness, so as to complete the outer profile of the airfoil-shaped oblong member (3).

12. A method of producing a turbomachine blade according to Claim 11, **characterized in that** the closing of the opening of the hollow weight-reducing seat (6a) in the main plate-like element (6) comprises the steps of:
- making a second plate-like element (106) which has a three-dimensional shape complementary to that of the opening of the hollow weight-reducing seat (6a) in said main plate-like element (6), and a thickness less than the depth of the hollow weight-reducing seat (6a);
- placing said second plate-like element (106) on the face of the main plate-like element (6) where the hollow weight-reducing seat (6a) is located, so as to close the opening of the hollow weight-reducing seat (6a); and
- attach the second plate-like element (106) irremovably to said main plate-like element (6).

13. A method of producing a turbomachine blade according to any one of Claims 2 to 12, **characterized in that** the lower edge (101a) of said blank plate (101) and the ridge (103a) of the projecting appendage (103) of said first semifinished part (102) are shaped to extend, from the leading edge (3a) to the trailing edge (3b) of the airfoil-shaped oblong member (3), along a curved, substantially Ω (omega) shaped path.

14. A method of producing a turbomachine blade according to any one of Claims 3 to 13, **characterized in that** the upper edge (101b) of said blank plate (101) and the ridge (105b) of the projecting appendage (105) of said second semifinished part (104) are shaped to extend, from the leading edge (3a) to the trailing edge (3b) of the airfoil-shaped oblong member (3), along a curved, substantially Q (omega) shaped path.

15. A method of producing a turbomachine blade according to any one of the preceding claims, **characterized in that** said blank plate (101) is obtained by press-forming said flat plate (100).

## Patentansprüche

1. Verfahren zum Herstellen einer Turbomaschinenschaufel (1), umfassend einen Verbindungsgrund (2) und ein längliches, strömungsprofilförmiges Element (3), das auslegerartig aus dem Verbindungsgrund (2) hervorragt;
wobei das längliche, strömungsprofilförmige Element (3) ein plattenartiges Hauptelement (6), das direkt mit dem Verbindungsgrund (2) verbunden ist, und eine Abdeckplatte (7) zum Verschließen eines gewichtsreduzierenden Hohlsitzes (6a), der in einer der beiden Seiten des plattenartigen Hauptelements (6) ausgebildet ist, umfasst; wobei das plattenartige Hauptelement (6) wiederum in eine untere Verbindungsrippe (9), die auslegerartig von dem Verbindungsgrund (2) hervorragt, und einen plattenartigen Körper (11), der mit der unteren Verbindungsrippe (9) stumpfverschweißt ist, um eine Verlängerung der unteren Verbindungsrippe (9) zu bilden, unterteilt ist;
wobei das Verfahren **dadurch gekennzeichnet ist, dass** es die folgenden Schritte umfasst:
- Herstellen einer flachen Metallplatte (100), die eine im Wesentlichen konstante Dicke (s) aufweist, die größer als die maximale Dicke des plattenartigen Körpers (11) der Schaufel (1) ist, und die eine Kontur aufweist, welche die flache, ausgedehnte Kontur des plattenartigen Körpers (11) annähert; und
- Drehen und Biegen der flachen Platte (100) mittels eines Blechumformungprozesses, sodass eine Rohlingsplatte (101) erhalten wird, wobei die dreidimensionale Form der Mittellinienebene (M) der Rohlingsplatte (101) im Wesentlichen der dreidimensionalen Form der Mittellinienebene (P) des plattenartigen Körpers (11) des plattenartigen Hauptelements (6) entspricht.

2. Verfahren zum Herstellen einer Turbomaschinenschaufel nach Anspruch 1, **dadurch gekennzeichnet, dass** es ferner den folgenden Schritt umfasst:
- Herstellen eines ersten Metallhalbzeugs (102), dessen dreidimensionale Form die Form des Verbindungsgrundes (2) der Schaufel (1) annähert und das ferner einen herausragenden Fortsatz (103) aufweist, dessen dreidimensionale Form die Form der unteren Verbindungsrippe (9) annähert;
- Formen der unteren Kante (101a) der Rohlingsplatte (101) und der Erhöhung (103a) des herausragenden Fortsatzes (103) des ersten Halbzeugs (102), sodass die untere Kante (101a) der Rohlingsplatte (101) und die Erhöhung (103a) des herausragenden Fortsatzes (103) des ersten Halbzeugs (102) eine zueinander komplementäre Form aufweisen;
- Anordnen der unteren Kante (101a) der Rohlingsplatte (101) im Anschlag an die Erhöhung (103a) des herausragenden Fortsatzes (103) des ersten Halbzeugs (102), während die Rohlingsplatte (101) lokal an dem herausragenden Fortsatz (103) ausgerichtet wird; und
- Stumpfschweißen der unteren Kante (101a) der Rohlingsplatte (101) an die Erhöhung (103a) des herausragenden Fortsatzes (103) des ersten Halbzeugs (102), um die beiden Teile starr miteinander zu verbinden.

3. Verfahren zum Herstellen einer Turbomaschinenschaufel nach Anspruch 1 oder 2, **dadurch gekennzeichnet, dass** die Dicke (s) der flachen Platte (100) die maximale Dicke des plattenartigen Körpers (11) der Schaufel (1) annähert.

4. Verfahren zum Herstellen einer Turbomaschinenschaufel nach einem der vorhergehenden Ansprüche, **dadurch gekennzeichnet, dass** die Schaufel (1) ferner einen oberen Verbindungskopf (5) umfasst; dass das plattenartige Hauptelement (6) ferner eine obere Verbindungsrippe (10) umfasst, die auslegerartig von dem Verbindungskopf (5) zum Verbindungsgrund (2) hervorragt und mit dem plattenartigen Körper (11) zusammengefügt ist; und das Verfahren ferner die folgenden Schritte umfasst:
- Herstellen eines zweiten Metallhalbzeugs (104), dessen dreidimensionale Form die Form des Verbindungskopfes (5) der Schaufel (1) annähert und das ferner einen herausragenden Fortsatz (105) aufweist, dessen dreidimensionale Form die Form der oberen Verbindungsrippe (10) annähert;
- Formen der oberen Kante (101b) der Rohlingsplatte (101) und der Erhöhung (105b) des herausragenden Fortsatzes (105) des zweiten Halbzeugs (104), sodass die obere Kante (101b) der Rohlingsplatte (101) und die Erhöhung (105b) des herausragenden Fortsatzes (105) des zweiten Halbzeugs (104) eine zueinander komplementäre Form aufweisen;
- Anordnen der oberen Kante (101b) der Rohlingsplatte (101) im Anschlag an die Erhöhung (105b) des herausragenden Fortsatzes (105) des zweiten Halbzeugs (104), während die Rohlingsplatte (101) lokal an dem herausragenden Fortsatz (105) ausgerichtet wird; und
- Stumpfschweißen der oberen Kante (101b) der Rohlingsplatte (101) an die Erhöhung (105b) des herausragenden Fortsatzes (105) des zweiten Halbzeugs (104), um die beiden Teile starr miteinander zu verbinden.

5. Verfahren zum Herstellen einer Turbomaschinenschaufel nach einem der vorhergehenden Ansprüche, **dadurch gekennzeichnet, dass** es ferner nach dem Verschweißen der Rohlingsplatte (101) mit dem ersten Halbzeug (102) und möglicherweise auch dem zweiten Halbzeug (104) den Schritt des Abgratens/Entfernens mittels spanender Bearbeitung des überschüssigen Materials von dem resultierenden Teil umfasst, um den Verbindungsgrund (2), das plattenartige Hauptelement (6) und möglicherweise auch den Verbindungskopf (5) der Schaufel (1) zu erhalten.

6. Verfahren zum Herstellen einer Turbomaschinenschaufel nach Anspruch 5, **dadurch gekennzeichnet, dass** der Schritt des Abgratens/Entfernens des überschüssigen Materials von dem resultierenden Teil den Schritt des Abgratens/Entfernens mittels spanender Bearbeitung des überschüssigen Materials von dem ersten (102) und möglicherweise auch von dem zweiten (104) Halbzeug umfasst, um den Verbindungsgrund (2) und möglicherweise auch den Verbindungskopf (5) der Schaufel (1) zu erhalten.

7. Verfahren zum Herstellen einer Turbomaschinenschaufel nach Anspruch 5 oder 6, **dadurch gekennzeichnet, dass** der Schritt des Abgratens/Entfernens des überschüssigen Materials von dem resultierenden Teil den Schritt des Abgratens/Entfernens mittels spanender Bearbeitung des überschüssigen Materials von den Kanten der langen Seite der Rohlingsplatte (101), von dem herausragenden Fortsatz (103) des ersten Halbzeugs (102) und möglicherweise von dem herausragenden Fortsatz (105) des zweiten Halbzeugs (104) umfasst, um die Vorderkante (3a) und Hinterkante (3b) des länglichen, strömungsprofilförmigen Elements (3) auszubilden.

8. Verfahren zum Herstellen einer Turbomaschinenschaufel nach Anspruch 5, 6 oder 7, **dadurch gekennzeichnet, dass** der Schritt des Abgratens/Entfernens des überschüssigen Materials von dem resultierenden Teil den Schritt des Abgratens/Entfernens mittels spanender Bearbeitung des überschüssigen Materials von den zwei Hauptseiten der Rohlingsplatte (101), von den zwei Hauptseiten des herausragenden Fortsatzes (103) des ersten Halbzeugs (102) und möglicherweise von den zwei Hauptseiten des herausragenden Fortsatzes (105) des zweiten Halbzeugs (104) umfasst, um das plattenartige Hauptelement (6) des länglichen, strömungsprofilförmigen Elements (3) zu erhalten.

9. Verfahren zum Herstellen einer Turbomaschinenschaufel nach einem der vorhergehenden Ansprüche, **dadurch gekennzeichnet, dass** sich der gewichtsreduzierende Hohlsitz (6a) über mehr als 40 % der Gesamtfläche der Seite des plattenartigen Hauptelements (6) erstreckt, auf der sich der gewichtsreduzierende Hohlsitz (6a) befindet.

10. Verfahren zum Herstellen einer Turbomaschinenschaufel nach einem der vorhergehenden Ansprüche, **dadurch gekennzeichnet, dass** der Schritt des Abgratens/Entfernens des überschüssigen Materials von dem resultierenden Teil den Schritt des Abgratens/Entfernens mittels spanender Bearbeitung des überschüssigen Metalls von den zwei Hauptseiten der Rohlingsplatte (101), von den zwei Hauptseiten des herausragenden Fortsatzes (103) des ersten Halbzeugs (102) und möglicherweise von den zwei Hauptseiten des herausragenden Fortsatzes (105) des zweiten Halbzeugs (104) umfasst, um das plattenartige Hauptelement (6) des länglichen, strömungsprofilförmigen Elements (3) zusammen mit dem gewichtsreduzierenden Hohlsitz (6a) zu erhalten.

11. Verfahren zum Herstellen einer Turbomaschinenschaufel nach Anspruch 10, **dadurch gekennzeichnet, dass** es ferner nach dem Ausbilden des gewichtsreduzierenden Hohlsitzes (6a) in einer der zwei Hauptseiten des plattenartigen Hauptelements (6) den Schritt des Verschließens der Öffnung des gewichtsreduzierenden Hohlsitzes (6a) mittels eines zweiten plattenartigen Elements (106) mit vorgegebener Dicke umfasst, um das Außenprofil des länglichen, strömungsprofilförmigen Elements (3) zu vervollständigen.

12. Verfahren zum Herstellen einer Turbomaschinenschaufel nach Anspruch 11, **dadurch gekennzeichnet, dass** das Verschließen der Öffnung des gewichtsreduzierenden Hohlsitzes (6a) in dem plattenartigen Hauptelement (6) die folgenden Schritte umfasst:
- Herstellen eines zweiten plattenartigen Elements (106), dessen dreidimensionale Form zu jener der Öffnung des gewichtsreduzierenden Hohlsitzes (6a) in dem plattenartigen Hauptelement (6) komplementär ist und dessen Dicke kleiner als die Tiefe des gewichtsreduzierenden Hohlsitzes (6a) ist;
- Anordnen des zweiten plattenartigen Elements (106) auf der Seite des plattenartigen Hauptelements (6), auf der sich der gewichtsreduzierende Hohlsitz (6a) befindet, sodass die Öffnung des gewichtsreduzierenden Hohlsitzes (6a) verschlossen wird; und
- unlösbares Anbringen des zweiten plattenartigen Elements (106) an dem plattenartigen Hauptelement (6).

13. Verfahren zum Herstellen einer Turbomaschinenschaufel nach einem der Ansprüche 2 bis 12, **dadurch gekennzeichnet, dass** die untere Kante (101a) der Rohlingsplatte (101) und die Erhöhung (103a) des herausragenden Fortsatzes (103) des ersten Halbzeugs (102) derart geformt sind, dass sie von der Vorderkante (3a) zur Hinterkante (3b) des länglichen, strömungsprofilförmigen Elements (3) entlang eines gebogenen, im Wesentlichen Q(Omega)-förmigen Pfades verlaufen.

14. Verfahren zum Herstellen einer Turbomaschinenschaufel nach einem der Ansprüche 3 bis 13, **dadurch gekennzeichnet, dass** die obere Kante (101b) der Rohlingsplatte (101) und die Erhöhung (105b) des herausragenden Fortsatzes (105) des zweiten Halbzeugs (104) derart geformt sind, dass sie von der Vorderkante (3a) zur Hinterkante (3b) des länglichen, strömungsprofilförmigen Elements (3) entlang eines gebogenen, im Wesentlichen Q(Omega)-förmigen Pfades verlaufen.

15. Verfahren zum Herstellen einer Turbomaschinenschaufel nach einem der vorhergehenden Ansprüche, **dadurch gekennzeichnet, dass** die Rohlingsplatte (101) durch Pressformen der flachen Platte (100) erhalten wird.

## Revendications

1. Procédé de production d'une pale de turbomachine (1) comprenant une emplanture d'accouplement (2) et un élément oblong à profil aérodynamique (3) faisant saillie en porte-à-faux par rapport à ladite emplanture d'accouplement (2) ;
ledit élément oblong à profil aérodynamique (3) comprenant un élément de type plaque principal (6) relié directement à l'emplanture d'accouplement (2), et une plaque de couverture (7) pour fermer une assise creuse réductrice de poids (6a) formée dans une des deux faces dudit élément de type plaque principal (6) ; ledit élément de type plaque principal (6) étant à son tour divisé en une ailette de liaison inférieure (9) faisant saillie en porte-à-faux par rapport à l'emplanture d'accouplement (2), et un corps de type plaque (11) soudé bout à bout à ladite ailette de liaison inférieure (9) pour former un prolongement de l'ailette de liaison inférieure (9) ;
le procédé étant **caractérisé en ce qu'**il comprend les étapes de :
- fabrication d'une plaque métallique plate (100) qui a une épaisseur sensiblement constante (s) supérieure à l'épaisseur maximale du corps de type plaque (11) de la pale (1), et qui a un contour approchant par excès le contour étendu plat dudit corps de type plaque (11) ; et
- torsion et courbure de ladite plaque plate (100) au moyen d'un processus de formage de tôle, afin d'obtenir une ébauche de plaque (101) dans laquelle la forme tridimensionnelle de la surface médiane (M) de l'ébauche de plaque (101) correspond sensiblement à la forme tridimensionnelle de la surface médiane (P) du corps de type plaque (11) dudit élément de type plaque principal (6) .

2. Procédé de production d'une pale de turbomachine selon la revendication 1, **caractérisé en ce qu'**il comprend également l'étape de :
- fabrication d'une première pièce métallique semi-finie (102) qui a une forme tridimensionnelle qui approche par excès la forme de l'emplanture d'accouplement (2) de la pale (1), et qui possède également un appendice en saillie (103) ayant une forme tridimensionnelle qui approche par excès la forme de l'ailette de liaison inférieure (9) ;
- façonnage du bord inférieur (101a) de l'ébauche de plaque (101) et de l'arête (103a) de l'appendice en saillie (103) de ladite première pièce semi-finie (102), de telle sorte que le bord inférieur (101a) de ladite ébauche de plaque (101) et de l'arête (103a) de l'appendice en saillie (103) de ladite pièce semi-finie (102) sont de forme complémentaire l'un par rapport à l'autre ;
- placement du bord inférieur (101a) de ladite ébauche de plaque (101) en butée contre l'arête (103a) de l'appendice en saillie (103) de ladite première pièce semi-finie (102), tout en alignant localement ladite ébauche de plaque (101) avec ledit appendice en saillie (103) ; et
- soudage bout à bout du bord inférieur (101a) de ladite ébauche de plaque (101) à l'arête (103a) de l'appendice en saillie (103) de ladite première pièce semi-finie (102) pour joindre les deux pièces l'une à l'autre de manière rigide.

3. Procédé de production d'une pale de turbomachine selon la revendication 1 ou 2, **caractérisé en ce que** l'épaisseur (s) de ladite plaque plate (100) approche par excès l'épaisseur maximale du corps de type plaque (11) de la pale (1).

4. Procédé de production d'une pale de turbomachine selon l'une quelconque des revendications précédentes, **caractérisé en ce que** ladite pale (1) comprend également une tête d'accouplement supérieure (5) ; **en ce que** l'élément de type plaque principal (6) comprend également une ailette de liaison supérieure (10), qui fait saillie en porte-à-faux par rapport à la tête d'accouplement (5) vers l'emplanture d'accouplement (2) et est fusionnée avec ledit corps de type plaque (11) ; et le procédé comprend également les étapes de :
- fabrication d'une seconde pièce métallique semi-finie (104) qui a une forme tridimensionnelle qui approche par excès la forme de la tête d'accouplement (5) de la pale (1), et qui possède également un appendice en saillie (105) ayant une forme tridimensionnelle qui approche par excès la forme de l'ailette de liaison supérieure (10) ;
- façonnage du bord supérieur (101b) de ladite ébauche de plaque (101) et de l'arête (105b) de l'appendice en saillie (105) de ladite seconde pièce semi-finie (104), de telle sorte que le bord supérieur (101b) de ladite ébauche de plaque (101) et de l'arête (105b) de l'appendice en saillie (105) de ladite seconde pièce semi-finie (104) sont de forme complémentaire l'un par rapport à l'autre ;
- placement du bord supérieur (101b) de ladite ébauche de plaque (101) en butée sur l'arête (105b) de l'appendice en saillie (105) de ladite seconde pièce semi-finie (104), tout en alignant localement ladite ébauche de plaque (101) avec ledit appendice en saillie (105) ; et
- soudage bout à bout du bord supérieur (101b) de ladite ébauche de plaque (101) à l'arête (105b) de l'appendice en saillie (105) de ladite seconde pièce semi-finie (104) pour joindre les deux pièces l'une à l'autre de manière rigide.

5. Procédé de production d'une pale de turbomachine selon l'une quelconque des revendications précédentes, **caractérisé en ce qu'**il comprend également, après que l'ébauche de plaque (101) est soudée à la première pièce semi-finie (102) et éventuellement également à la seconde pièce semi-finie (104), l'étape d'élimination/enlèvement, par usinage par enlèvement de matière, de la matière excédentaire de la pièce résultante pour obtenir l'emplanture d'accouplement (2), l'élément de type plaque principal (6), et éventuellement également la tête d'accouplement (5) de la pale (1).

6. Procédé de production d'une pale de turbomachine selon la revendication 5, **caractérisé en ce que** l'étape d'élimination/enlèvement de matière excédentaire de la pièce résultante comprend l'étape d'élimination/enlèvement, par usinage par enlèvement de matière, de la matière excédentaire de la première (102) et éventuellement également de la seconde (104) pièce semi-finie, pour obtenir l'emplanture d'accouplement (2) et éventuellement la tête d'accouplement (5) de la pale (1) .

7. Procédé de production d'une pale de turbomachine selon la revendication 5 ou 6, **caractérisé en ce que** l'étape d'élimination/enlèvement de la matière excédentaire de la pièce résultante comprend l'étape d'élimination/enlèvement, par usinage par enlèvement de matière, de la matière excédentaire des bords latéraux longs de ladite ébauche de plaque (101), de l'appendice en saillie (103) de ladite première pièce semi-finie (102), et éventuellement de l'appendice en saillie (105) de ladite seconde pièce semi-finie (104), de sorte à former le bord d'attaque (3a) et le bord de fuite (3b) de l'élément oblong à profil aérodynamique (3).

8. Procédé de production d'une pale de turbomachine selon la revendication 5, 6 ou 7, **caractérisé en ce que** l'étape d'élimination/enlèvement de la matière excédentaire de la pièce résultante comprend l'étape d'élimination/enlèvement, par usinage par enlèvement de matière, de la matière excédentaire des deux faces principales de ladite ébauche de plaque (101), des deux faces principales de l'appendice en saillie (103) de ladite première pièce semi-finie (102), et éventuellement des deux faces principales de l'appendice en saillie (105) de ladite seconde pièce semi-finie (104), de sorte à obtenir l'élément de type plaque principal (6) de l'élément oblong à profil aérodynamique (3).

9. Procédé de production d'une pale de turbomachine selon l'une quelconque des revendications précédentes, **caractérisé en ce que** ladite assise creuse réductrice de poids (6a) s'étend sur plus de 40 % de la surface totale de la face de l'élément de type plaque principal (6) où est située l'assise creuse réductrice de poids (6a).

10. Procédé de production d'une pale de turbomachine selon l'une quelconque des revendications précédentes, **caractérisé en ce que** l'étape d'élimination/enlèvement de la matière excédentaire de la pièce résultante comprend l'étape d'élimination/enlèvement, par usinage par enlèvement de matière, du métal excédentaire des deux faces principales de ladite ébauche de plaque (101), des deux faces principales de l'appendice en saillie (103) de ladite première pièce semi-finie (102), et éventuellement des deux faces principales de l'appendice en saillie (105) de ladite seconde pièce semi-finie (104), de sorte à obtenir l'élément de type plaque principal (6) de l'élément oblong à profil aérodynamique (3) ainsi que l'assise creuse réductrice de poids (6a).

11. Procédé de production d'une pale de turbomachine selon la revendication 10, **caractérisé en ce qu'**il comprend également, après la formation de l'assise creuse réductrice de poids (6a) dans l'une des deux faces principales dudit élément de type plaque principal (6), également l'étape de fermeture de l'ouverture de ladite assise creuse réductrice de poids (6a) au moyen d'un second élément de type plaque (106) d'épaisseur prédéterminée, de sorte à parachever le profil externe de l'élément oblong à profil aérodynamique (3).

12. Procédé de production d'une pale de turbomachine selon la revendication 11, **caractérisé en ce que** la fermeture de l'ouverture de l'assise creuse réductrice de poids (6a) dans l'élément de type plaque principal (6) comprend les étapes de :
- fabrication d'un second élément de type plaque (106) qui a une forme tridimensionnelle complémentaire de celle de l'ouverture de l'assise creuse réductrice de poids (6a) dans ledit élément de type plaque principal (6), et une épaisseur inférieure à la profondeur de l'assise creuse réductrice de poids (6a) ;
- placement dudit second élément de type plaque (106) sur la face de l'élément de type plaque principal (6) où est située l'assise creuse réductrice de poids (6a), de sorte à fermer l'ouverture de l'assise creuse réductrice de poids (6a) ; et
- fixation du second élément de type plaque (106) de manière inamovible audit élément de type plaque principal (6) .

13. Procédé de production d'une pale de turbomachine selon l'une quelconque des revendications 2 à 12, **caractérisé en ce que** le bord inférieur (101a) de ladite ébauche de plaque (101) et de l'arête (103a) de l'appendice en saillie (103) de ladite première pièce semi-finie (102) sont façonnés pour s'étendre, du bord d'attaque (3a) vers le bord de fuite (3b) de l'élément oblong à profil aérodynamique (3), le long d'une trajectoire courbe sensiblement en Ω (oméga).

14. Procédé de production d'une pale de turbomachine selon l'une quelconque des revendications 3 à 13, **caractérisé en ce que** le bord supérieur (101b) de ladite ébauche de plaque (101) et de l'arrête (105b) de l'appendice en saillie (105) de ladite seconde pièce semi-finie (104) sont façonnés pour s'étendre, du bord d'attaque (3a) vers le bord de fuite (3b) de l'élément oblong à profil aérodynamique (3), le long d'une trajectoire courbe, sensiblement en Ω (oméga).

15. Procédé de production d'une pale de turbomachine selon l'une quelconque des revendications précédentes, **caractérisé en ce que** ladite ébauche de plaque (101) est obtenue par formage à la presse de ladite plaque plate (100) .
